## Europäisches Patentamt
## European Patent Office
## Office européen des brevets

(11) Publication number: **0 122 594**
**A2**

## (12) EUROPEAN PATENT APPLICATION

(21) Application number: **84104040.5**

(22) Date of filing: **11.04.84**

(51) Int. Cl.³: **H 04 B 3/23**

(30) Priority: **18.04.83 US 485987**

(43) Date of publication of application:
**24.10.84 Bulletin 84/43**

(84) Designated Contracting States:
**AT DE FR GB NL SE**

(71) Applicant: **International Standard Electric Corporation**
**320 Park Avenue**
**New York New York 10022(US)**

(72) Inventor: **Gingell, Michael John**
**113 Trotters Ridge Dr.**
**Raleigh North Carolina(US)**

(74) Representative: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

(54) Line circuit with echo compensation.

(57) A line circuit (1) interposed between two unidirectional digital lines (3, 4) and a single bidirectional analog line (2) has a first path (7) in which incoming digital signals are processed and converted into analog signals, and a second path (14) in which outgoing analog signals are converted into digital signals. The two paths (7, 14) are connected to the bidirectional analog line (2) by a common junction (10, 11). A digital hybrid (17) is interposed between the first and second paths (7, 14) and provides compensation for the echo response effects. The digital hybrid (17) is supplied with signals from the first path (7) and with respective correction coefficients. Resultant digital correction signals are combined with the digital signals propagating in the second path (14). To establish the values of the correction coefficients, a training pattern is sent into the line circuit (1), and the responses to the training pattern with the digital hybrid (17) out of operation as obtained at the digital output of the line circuit (1) are then used as the correction coefficients.

./...

EP 0 122 594 A2

_Fig. 1_

M.J.Gingell - 16

## LINE CIRCUIT WITH COMPENSATION

The present invention generally relates to a line circuit with echo compensation, and more particularly to a line circuit of the above type which is interposed between two lines operative for unidirectionally carrying digital signals and a single line operative for bidirectionally carrying analog signals, especially as used in telephony.

When incoming and outgoing signals are transmitted through a common bidirectional transmission line including two wires, as they frequently are between a telephone subscriber circuit and local telephone exchange or a central office, there is encountered the problem that the incoming signals generate an echo response which may be transmitted back to the point of origin of the incoming signals, where it is perceived as annoying interference. While this problem also exists in fully analog transmission systems, its existence is even more disturbing in communication systems which use digital signals, such as pulse code modulated (PMC) signals, for communication between the central offices

ZT/P-vHy/fö
06.04.1984

M.J.Gingell - 16

or local telephone exchanges. In communication systems
of this type, a coding and decoding arrangement, which
will bei hereafter referred to as a line circuit, is
interposed between the bidirectional analog subscriber
line and the unidirectional digital lines. This line
circuit processes the incoming digital signals and
converts them to analog signals, and converts the
outgoing analog signals into digital signals and
processes the digital signals prior to sending them to
the point of origin of the incoming signals. In this
environment, the presence of the echo response in the
outgoing analog signal may severely interfere with the
outgoing digital signals, especially when both parties
to the telephone conversation talk at the same time.

The problems resulting from the echo response to
the incoming signals have already been recognized and
attempts have been made to overcome the same. One
conventional approach to this problem is to arrange an
analog hybrid at the junction of the line circuit to the
bidirectional line, and to provide the analog hybrid
with a balancing network including a line matching or
terminating  impedance which ideally matches the line
impedance. However, experience has shown that it is
very difficult to obtain a matching impedance which
would be effective over the entire range of frequencies
included in the analog signal being transmitted,
especially when the bidirectional line is less than
perfectly designed.  Also, it would be too cumbersome
and time-consuming to attempt to adjust the matching

M.J.Gingell - 16

impedance for each of the lines individually. Thus, in practice, balancing networks with two different matching impedance values are being used, one for loaded lines and the other for unloaded lines. Yet, the impedances of both the loaded lines and the unloaded lines differ within relatively broad ranges from the matching impedances of the respective analog hybrids so that the analog hybrids, more often than not, only suppress but do not eliminate the effects of the echo response at the common junction of the line circuit to the bi-directional line and thus in the transmit path.

The imperfections of this conventional echo-reducing technique have already been recognized and attempts have been made to overcome the same. So, for instance, the commonly assigned U.S. Patent No. 4, 302, 631 discloses a line circuit of the type here under consideration in which a finite impulse response (FIR) filter is interposed between the receive path of the line circuit upstream of the receive filter and the transmit path of the line circuit downstream of the transmit filter. The FIR filter generates a correction signal based on the incoming digital signal, and the thus generated digital correction signal is combined with the transmitted digital signal in such a manner as to suppress the effect of the echo response on the transmitted digital signal. This arrangement is very advantageous in many respects; however, because of the location at which the FIR filter is arranged, the FIR filter has to take the operation of the receive and transmit filters into consideration and, consequently, will be complicated.

M.J.Gingell - 16

Accordingly, it is an object of the present invention to provide a line circuit interposed between a bidirectional line and two unidirectional lines, which does not possess the disadvantages of the conventional line circuits of this type.

Still another object of the present invention is to so construct the line circuit of the type here under consideration as effectively to counteract the effect of an echo response to incoming signals on the outgoing signals.

It ist yet another object of the present invention to so design the above line circuit as to be simple in construction, inexpensive to manufacture, relatively easy to use, and reliable nevertheless.

A concomitant object of the present invention is to develop an arrangement for setting the coefficients as used in the line circuit of the above type for generating correction signals used in counteracting the effect of the echo response on the outgoing signals.

In pursuance of these objects and others which will become apparent hereafter, one feature of the present invention is embodied in a line circuit which is interposed between two unidirectional lines and a bidirectional line and which includes separate first and second paths in which first and second signals propagating respectively from one of the unidrectional lines toward a junction with the bidirectional line and from the junction toward the other unidirectional line appear

M.J.Gingell - 16

as first and second digital signals with a predetermined sample rate and echo responses to the first signals appearing at the junction have an effect on the second signals. According to the invention, the first digital signals are derived from the first path at a sample rate lower than the predermined sample rate. Then digital correction signals are generated based on the first digital signals received at the lower sample rate, and the digital correction signals are so combined with the second digital signals in the second path as to compensate at least partially for the effect of the echo responses on the second digital signals. The sample rate of the digital correction signals is increased to the predetermined sample rate before the digital correction signals are combined with the second digital signals.

A particular advantage of the line circuit as described so far resides in the fact that, by stepping down the sample rate at which the first signals are supplied to the means for generating the digital correction of the generating means, that is, to use a lower number of components than would be necassary if the generating means operated at the predetermined sample rate. The aforementioned first and second paths are advantageously situated between the processing means for the incoming digital signals and the digital-to-analog converter means, on the one hand, and between the analog-to digital converter means and the means for processing the outgoing digital signals, on the other hand. In this manner, it is achieved that the generating means, preferably an FIR filter, does not

M.J.Gingell - 16

have to take the response of the receive and transmit digital signal processing means into consideration in generating the correction signals.

According to another aspect of the present invention, the line circuit further comprises means for determining the coefficients which are used in the FIR filter for generating the correction signals, this determining means being used while no correction signals are being combined with the second signals in the second path. The determining means advantageously includes means for sending a training pattern of discrete pulses having magnitudes reflecting the influence of the receive and transmit signal processing means on the first and second signals, as the first signals into the first path through the receive signal processing means, means for sensing the second signals appearing at the output of the transmitter signal processing means in response to the training pattern, and means for extracting successive outputs of the sensing means in response to the training pattern as the values for setting the coefficients. This approach is advantageous in that the values of the rexpective coefficients can be directly extracted from the response to the training pattern, without involving expensive manipulations or requiring access to the first and second paths.

Above-mentioned and other features and objects of this invention will become more apparent by reference to

M.J.Gingell - 16

the following description taken in conjuction with the
accompanying drawings in which:

Figure 1 is  a diagrammatic representation of the
line circuit of the present invention as interposed
between an analog bidirectional line and two digital
unidirectional lines;

Figure 2 is a diagrammatic representation of a
currently preferred construction of an arrangement for
combining correction signals with transmitted signals
for use in the line circuit of Figure 1;

Figure 3 is a diagrammatic representation
including the line circuit of Figure 1 and additional
elements operative for setting the coefficients used in
generating the correction signals; and

Figure 4 is a graphic representation of a training
pattern used in the arrangement of Figure 3 for
determining the values of the coefficients.

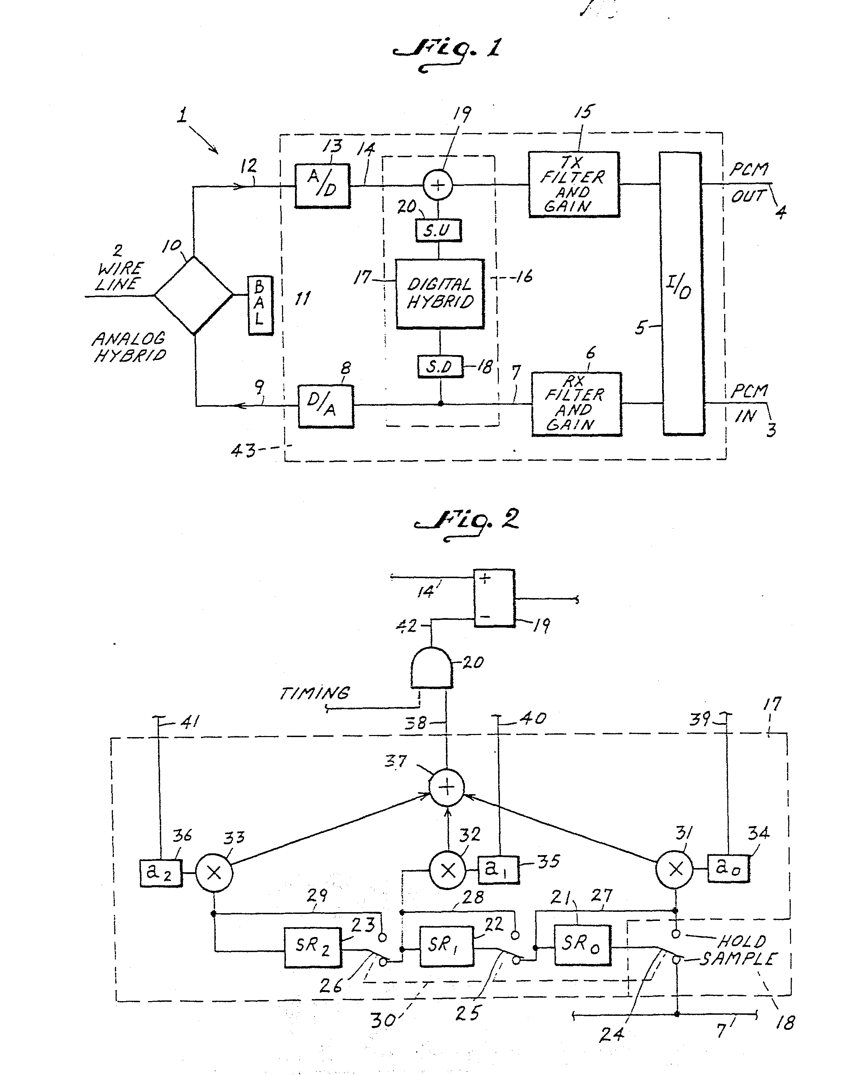

Referring now to the drawing in detail and first
to Fig. 1, it may be seen that the reference numeral 1
has been used to indentify a line circuit according to
the present invention in its entirety.  The line
circuit 1 ist interposed between a bidirectional two-wire
line 2, and two unidirectional lines 3 and 4.  In
operation, the bidirectional line 2 carries analog
signals, line 3, incoming digital signals, and line 4
outgoing digital signals.  Advantageously, the incoming
and outgoing digital signals are pulse code modulated
(PCM) signals.

M.J.Gingell - 16

The incoming digital signals arriving at the line circuit 1 first reach an input/output interface 5 where they are processed in a conventional manner. Such processing usually involves stepping-up of the sample rate of the incoming digital signal, such as by insertion of zero samples and also expansion from compressed (μ-law) to linear format. The incoming digital signals then proceed to a receive filter and gain arrangement 6 to be processed, also in a conventional manner, before entering a first path 7. The receive filter and gain arrangement 6 preferably includes a digital filter, especially a recursive one. A filter of this type, which is in widespread use in the telecommunication field, is basically a binary logic unit which performs mathematical operations on the digital signals reaching the same to convert such signals in digital signals having the desired properties, such as a high signal-to-noise ratio. The digital signals propagating in the first path 7 then reach a digital-to-analog converter arrangement 8 to be converted, in a conventional manner, into analog signals which then propagate through a connection line 9 to an analog hybrid 10. The analog hybrid 10 is of any conventional construction and includes a balancing network 11 that includes a constant impedance, such as 900 ohm. The analog hybrid 10 is connected to the bidirectional line 2. Another connecting line 12 leads from the analog hybrid 10 to an analog-to-digital converter arrangement 13 and carries analog signals from the former to the latter. The analog-to-digital converter arrangement 13 converts the outgoing analog signal into digital signals which

M.J.Gingell - 16

are issued into a second path 14 and appear in the latter
at the aforementioned stepped-up sample rate. A transmit
filter and gain arrangement 15, which advantageously
includes digital filters, especially recursive digital
filters, of a construction and mode of operation similar
to those of the receive filter, acts on the outgoing
signals received from the second path 14. After leaving
the transmit filter and gain arrangement 15, the digital
signals to be transmitted reach the input/ouput
interface 5 from where they enter the unidirectional
line 4 as processed digital signals, for instance, in
the PCM format. The processing of the transmitted
signals in the input/output interface 5 ussually involves
stepping-down of the sample rate to the same level as
that of the incoming PCM signals and compression to $\mu$ or
A-law format.

Thus, the receive and transmit signals undergo
several rate changes. In the transmit direction, after
analog-to-digital conversion preferably by encoding by a
delta sigma circuit at 4MHz, the signal is decimated to
32 kHz and passes through the transmit filters 15, being
decimated again to 8 kHz before compression for
transmission as PCM. In the receive direction the 8 kHz
PCM signal is expanded and interpolated up to 32 kHz
sample rate by the receive filtering. After this it
goes to the interpolator and D/A8 where it is stepped
up to 512 kHz before being reconstituted as an analog
audio signal. The expression "sample rate" as used
herein refers to the rate at which the individual samples

M.J.Gingell - 16

to 512 kHz before being reconstituted as an analog audio signal. The expression "sample rate" as used herein refers to the rate at which the individual samples occur. Each sample contains a word in the particular digital code, such as an 8-bit word in PCM and, for instance, a 16-bit word in serial form in each of the paths 7 and 14.

An echo-compensating unit 16 is interposed between the first path 7 and the second path 14. The unit 16 includes a digital hybrid 17 which will be described in more detail below, a stepping-down unit 18 which is interposed between the first path 7 and the digital hybrid 17, an adding arrangement 19 interposed in the second path 14, and a stepping-up unit 20 interposed between the digital hybrid 17 and the adding arrangement 19. The stepping down unit 18 is operative for reducing the sample rate from the sample rate of the digital signals propagating in the first path 7 to a lower sample rate, preferably to that of the incoming signals received from the unidirectional line 3, that is, in the given example, to 8 kHz. The stepping-up arrangement 20 is operative for increasing the lowered sample rate (8 kHz) to the sample rate of the transmitter signals propagating through the second path 14, that is, to 32 kHz or 32 k words/sec with each word containing a series of 16 binary bits in the given example. Each such word constitutes the respective first or second digital signal.

M.J.Gingell - 16

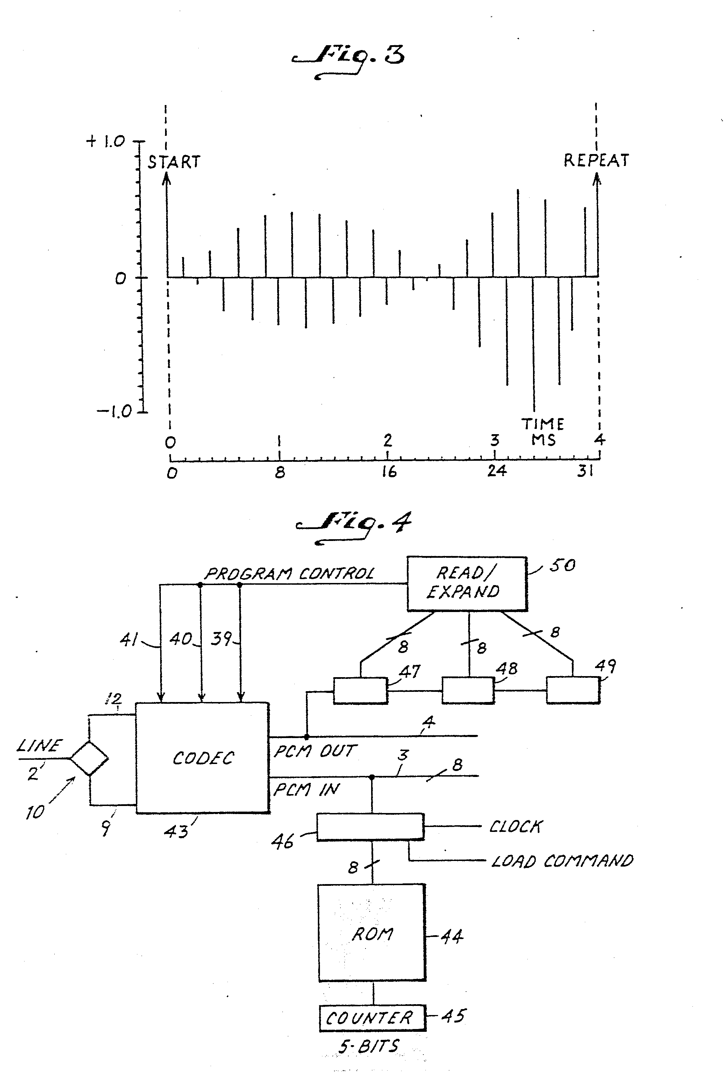

Referring now to Fig. 2 which shows certain details of a currently preferred embodiment of the echo-compensating unit 16, it may be seen that the digital hybrid 17 is constructed as a finite impulse response (FIR) filter including, as illustrated, three consecutively arranged shift registers or similar data storage arrangements 21, 22 and 23, each capable of storing a word. The stepping-down arrangement 18 is illustrated to include a switch 24 which is interposed between the first path 7 and the storage arrangement 21 and is operable between its sample and hold states. Similar switches 25 and 26 are interposed respectively between the output of the storage arrangement 21 and the input of the storage arrangement 22 and between the output of the storage arrangement 22 and the input of the storage arrangement 23. The switches 24 to 26 are ganged with one another such that they are simultaneously operated between their sample and hold states. In the sample states of the switches 24 to 26, date derived from the first path 7 is fed into the storage arrangement 21, while the contents of the storage arrangement 21 is simultaneously fed into the storage arrangement 22 and the contents of the storage arrangement 22 is simultaneously transferred into the storage arrangement 23. On the other hand, when the switches 24 to 26 assume their hold states, the contents of the respective storage arrangements 21 to 23 are recirculated back ino the very same storage arrangements 21 to 23 through respective loops 27, 28

M.J.Gingell - 16

and 29. The reference numeral 30 has been used to designate an arrangement for simultaneously operating the switches 24 to 26 between their sample and hold states. The operating arrangement 30 operates at a sample rate lower than the sample rate of the signals propagating through the first path 7. It is currently preferred so to operate the operating arrangement 30 that the switches 24 to 26 are in their sample states for one out of every four samples of the signal propagating in the first path 7, while the switches 24 to 26 are in their hold states for the remaining three samples of the signals propagating in the first path 7. Thus, the switch 24 acts as a decimator which reduces the sample rate of the signals entering the digital hybrid 17 to one-fourth of the sample rate of the digital signals propagating in the first path 7.

The digital hybrid 17 which may be a FIR filter further includes multiplying arrangements 31, 32 and 33 in which the respective outputs of the storage arrangements 21, 22 and 23 as they appear in the lines 27, 28 and 29, respectively, are multiplied by respective coefficients $a_0$, $a_1$ and $a_2$ that are respectively stored in storage arrangements 34, 35 and 36. It is currently proposed to store the coefficients $a_0$, $a_1$, $a_2$ in the form of 5-binary-bit words. The multiplication products are then added to one another in an adding arrangement 37 to obtain a correction signal which appears in an output line 38. Figur 2 also shows setting lines 39, 40 and 41 which are connected to the respective storage

M.J.Gingell - 16

arrangements 34, 35 and 36 and which may be used for setting the values of the coefficients $a_0$, a1 and $a_2$, for instance, in a manner which will be discussed in detail later. The multiplying arrangements 31, 32 and 33 may be constructed as conventional digital serial multipliers, and the adding arrangement 37 may be constructed as a conventional digital serial adder. Thus, the FIR filter 17 operates in the digital domain and the correction signal appearing in the output line 38 is a digital correction signal.

The stepping-up arrangement 20 is shown in Fig. 2 to be constituted by an AND gate 20 which has the output line 38 of the FIR filter 17 connected to one of its inputs, and a timing line connected to its other input. A connecting line 42 connects the output of the AND gate 20 to the inverting input of the adding arrangement 19 which has its non-inverting input and its ouput connected to the second path 14. Of course, the gate 20 could also be a NAND gate and the connecting line 42 could be connected to a non-inverting input of the adder 19 which is preferably constructed as a serial adder of a conventional construction. The particulars of this part of the arrangement will depend on the values of the correction signals relative to the values of the signals propagating in the second path 14 toward the adder 19, such that the correction signals are combined with the signals propagating in the second path 14 and reaching the adder 19 in counterphase thereto. The gate 20 is operated by the timing signals in such a manner as to bring the sample rate of the correction signals appearing in the connecting line 42

M.J.Gingell - 16

up to the sample rate of the signals propagating in the second path 14. It ist currently preferred that the gate 20 increase the sample rate fourfold in that the gate 20 opens, in a predetermined time relation to the operation of the operating means 30, for one of every four samples of the signal propagating in the second path 14 to let the correction signals pass therethrough to the adder 19, while being closed for the remaining three of the samples.

As indicated in Fig. 1, the elements 5 to 8 and 13 to 20 are preferably provided on a single chip 43 (Figur 4). This, in most instances, means that the first and second paths 7 and 14 are inaccessible. If access could be had to the first and second paths 7 and 14, it would be relatively simple to arrive at the desired values of the aforementioned coefficients $a_0$, $a_1$ and $a_2$ by simply feeding a series of pulses into the first path 7 while the unit 16 is disabled such that no correction signals are fed to the adder 19, and by extracting the effect of the echo responses to the aforementioned series of pulses from the second path 14 and using the extracting values for setting the coefficients $a_0$, $a_1$ and $a_2$. As it is with a single chip 43, access may be had to the input and output lines 3 and 4, but usually not to the first and second paths 7 and 14. It is still possible to send a test pattern of discrete pulses into the line 3, and extract the response from the line 4. Yet, under such circumstances, the test signals sent into the input line 3 are processed by a signal processing arrangement including the input/output

M.J. Gingell - 16

interface 5 and receive filter and gain arrangement 6, and the reflected echo response signals are processed by another signal processing arrangement including the transmitter filter and gain arrangement 15 and the input/output interface 5 before reaching the output line 4. The echo response signals appearing in the line 4 reflect the effect of the signal processing means 5, 6, 15 und 5 on the incoming testing signal, on the one hand, and on the echo response signals on the other hand. Hence, the influence of the signal processing means 5, 6 and 15, 5 has to be compensated for before it is possible to obtain the values of the coefficients $a_0$, $a_1$ and $a_2$.

To achieve this compensation, it is currently proposed to send a repeated series of pulses into the input line 3, these pulses being far enough apart that the echos from successive pulses do not interfere. It is currently preferred to space the individual pulses apart by four milliseconds. The testing signal is now periodic and can be represented as the sum of a number of discrete sinusoidal waves. The effect of the signal processing means 5, 6 and 15, 5 on such sinusoidal wave components is known and can be counteracted by simply preshifting the components by the amplitude and phase equivalent of the effects of the signal processing means 5, 6 and 15, 5 on the respective signals. Then, the components are recombined to form a single new periodic test signal, which will be hereafter called a coefficient training pattern. An example of the

M.J.Gingell - 16

coefficient training pattern is shown in Figur 3 of the drawing.

A practical implementation of the above approach is illustrated in Figur 4. The test pattern is stored as a plurality of 8-bit test words in a ROM unit 44 which is addressed by a program counter 45 to successively feed the test words stored in the ROM 44 into a shift register 46 that is controlled by a clock and load command. The 8 bits of the respective test word are then fed into the input line 3 and, after passing through the chip or codec 43, they reach the analog hybrid 10 and the line 2. The echo responses proceed from the analog hybrid 10 into and through the codec 43 while no correction signals are combined with the signals passing through the codec 43 toward the output line 4. The signals in the output line 4 are fed into three serially arranged 8-bit registers 47, 48 and 49. Since these signals are in the PCM format, they are fed into a read/expand unit 50 of a conventional construction from where they are supplied as respective 5-bit words respectively to the lines 39, 40 and 41 to set the coefficients $a_0$, $a_1$ and $a_2$.

In practice, the test pattern or coefficient training pattern is sent into the line 3, cycling through 32-word cycle N times as necessary after a minimum 32-word delay, preferably longer, for the recursive filters to settle. Thereafter, the first three words that echo back are read from the respective shift registers 47, 48 and 49. After expansion and

M.J.Gingell - 16

truncation in the read/expand unit 50, there are
obtained actual coefficients $a_0$, $a_1$ and $a_2$ which
can be fed into the codec 43 through the lines 39, 40
and 41 to set up the coefficient storage arrangements
34, 35 and 36.

It ist further contemplated by the present
invention to average at least three words in every
frame for a number of frames, such as to improve the
noise immunity. If the averaging is performed over
four frames, the time span is 16 milliseconds which
gives excellent rejection against 60 Hz.

M.J.Gingell - 16


### Claims

1.   A digital communication line circuit (1) interposed between two unidirectional communication lines (3, 4) and a bidirectional communication line (2), including separate first and second communication paths (7, 14) in which first and second signals propagating respectively from one of the unidirectional communication lines (3) toward a junction with the bidirectional communication line (2) and from the junction toward the other unidirectional communication line (4) are respectively constituted by first and second digital signals with a predetermined sample rate, further including digital-to-analog converter means (8) interposed between said first communication path (7) and said junction, and analog-to-digital converter means (13) interposed between said junction and said second communication path (14) and in which echo-compensating means (16) are interposed between the first and second communication paths (7, 14), characterised in that

there are means (18) for deriving said first digital signals from said first communication path (7) at a sample rate lower than said predetermined sample rate;

M.J.Gingell - 16

and means (17) for generating digital correction signals based on said first digital signals received from said deriving means (18) at said lower sample rate;

and means (19, 20) for combining said digital correction signals with said second digital signals in said second communication path (14) such as substantially to eliminate the echoes from said second digital signals, said combining means (19, 20) including means (20) for increasing the sample rate of said digital correction signals to said predetermined sample rate prior to combining said digital correction signals with said second digital signals.

2. A line circuit as claimed in claim 1, characterised in that said bidirectional communication line (2) is an analog telephone line, and said unidirectional communisation lines (3, 4) are digital telephone lines.

3. A line circuit as claimed in claim 1 characterised in that said junction includes an analog hybrid circuit (10) adapted to be interposed between said converters (8, 13) and said bidirectional communication line (2) and including a balance network (11).

4. A line circuit as claimed in claim 3, characterised in that said balance networt (11) is operative for suppressing analog echoes prior to their transmission from said junction to said analog-to-digital converter (13) at least for certain frequencies of the first signal.

M.J.Gingell - 16

5. A line circuit as claimed in claim 1, characterised in that a sample rate stepping-up device (5) is arranged ahead of said first communication path (7) as considered in the direction of propagation of said first signals and that a sample rate stepping-down device (5) is arranged behind said second communication path (14) as considered in the direction of propagation of said signals, and that a first filter means (6) is interposed between said stepping-up device (5) and said first communication path (7), and a second filter means (15) is interposed between said second communication path (14) and said stepping-down device (5).

6. A line circuit as claimed in claim 1 or 5, characterised in that the said first filter means (6) is arranged ahead of said first communication path (7) as considered in the direction of propagation of said first signals, that the said second filter means (15) is arranged behind said second communication path (14) as considered in the direction of propagation of said second signals, and that each of said filter means (6, 15) includes a digital filter.

7. A line circuit as claimed in claim 1, characterised in that the said echo-compensating means (16) includes a finite impuls response filter (17) which includes a plurality of storage means (21, 22, 23) each for storing one of said first digital signals at said lower sample rate and arranged in series with one another such that the first digital signal previously stored in one of said storage means (21, 22, 23) is transferred at the lower sample rate into the succeeding storage means (22, 23, 21), means (31, 32, 33) for multiplaying the first digital signals available in said filter (17) by respective correction coefficients

M.J.Gingell - 16

$(a_0, a_1, a_2)$, and means (37) for adding the output signals of said multiplying means (31, 32, 33).

8. A line circuit as claimed in claim 1 or 7, characterised in that said deriving means (18) includes a selector switch (24) interposed between said first communication path (7) and the first of said storage means (21) and operative for supplying the first digital signals to said first storage means (21) at said lower sample rate, and at least one additional selector switch (25, 26) interposed between the respective preceding and succeeding storage means (21, 22, 23) and ganged with said selector switch(24) to transfer the contents of said preceding storage means to said succeeding storage means at said lower sample rate in synchronism with the supply of said first digital signal to said first storage means (21).

9. A line circuit as claimes in claim 7, characterised in that said combining means (19, 20) includes a serial adder (19) interposed in said second communication path (14) and having a first input (42) coupled to said adding means (37) and a second input and an output connected to said second communication path (14), and a gate (20') interposed between said adding means (37) and said first input (42) of said serial adder (19) and operated to increase the sample rate of the output of said adding means to said predetermined sample rate.

10. A line circuit as claimed in claim 5 or 7, characterised in that first signal processing means (5, 6) arranged ahead of said first communication path (7) as considered in the direction of propagation of said first si-

M.J.Gingell - 16

gnals, and second signal processing means (15, 5) arranged behind said second communication path (14) as considered in the direction of propagation of said second signals; wherein said correction coefficients ($a_o$, $a_1$, $a_2$) are capable of being set and said deriving, generating and combining means (17, 18, 19, 20) constitute a unit (16) capable of being rendered inoperative; and further comprising means for determining said correction coefficients ($a_o$, $a_1$, $a_2$) while said unit (16) is inoperative, including means (44, 45, 46) for sending a succession of discrete pulses as said first signals into said first communication path (7) through said first signal processing means (5, 6), means (47, 48, 49) for sensing the second signals appearing at the output of said second signal processing means (1ᵤ, 5) in response to said discrete pulse succession, means for so operating said sending means (44, 45, 46) that said discrete pulse succesion forms a training pattern reflecting the influence of said first and second signal processing means (5, 6 und 15, 5) on said first and second signals, and means (50) for extracting successive outputs of said sensing means (47, 48,49) in response to said training pattern as the values for setting the correction coefficients ($a_o$, $a_1$, $a_2$).

11. A line circuit as claimed in claim 10, characterised in that there are means for establishing said training pattern, comprising means for so initially operating said sending means (44, 45, 46) prior to said operating step that said discrete pulses of said succession have equal magnitudes, and means for utilizing the outputs of said sensing means (47, 48, 49) in response to the succession of discrete pulses of equal magnitudes fordetermining the magnitudes of the discrete pulses in said training pattern.

0122594

Fig. 1

Fig. 2

*Fig. 3*

*Fig. 4*